Europäisches Patentamt

European Patent Office

Office européen des brevets

(11) Veröffentlichungsnummer: **0 392 486**

**A1**

(12) **EUROPÄISCHE PATENTANMELDUNG**

(21) Anmeldenummer: **90106911.2**

(22) Anmeldetag: **11.04.90**

(51) Int. Cl.⁵: **G01L 9/08**

(30) Priorität: **13.04.89 DE 3912177**

(43) Veröffentlichungstag der Anmeldung:
**17.10.90 Patentblatt 90/42**

(84) Benannte Vertragsstaaten:
**DE FR GB**

(71) Anmelder: **Siemens Aktiengesellschaft**
**Wittelsbacherplatz 2**
**D-8000 München 2(DE)**

(72) Erfinder: **Meixner, Hans, Dr., Dipl.-Phys.**
**Max-Planck-Strasse 5**
**D-8031 Haar(DE)**
Erfinder: **Mock, Randolf, Dr., Dipl.-Phys.**
**Emil-Geis-Strasse 9**
**D-8000 München 70(DE)**
Erfinder: **Winter, Hans, Dr., Dipl.-Phys.**
**Angerstrasse 36**
**D-8011 Höhenkirchen-Siegertsbrunn(DE)**

(54) **Drucksensor für den Verbrennungsraum von Kolben-Verbrennungsmotoren.**

(57) Drucksensor für Kfz-Motore mit mechanischer Temperaturkompensation (4), damit das als Sensorelement verwendete Piezoteil (3) stets unter Vorspannung steht.

EP 0 392 486 A1

## Drucksensor für den Verbrennungsraum von Kolben-Verbrennungsmotore

Aus der französischen Patentschrift 10 31 155 ist ein Drucksensor für den Verbrennungsraum eines Kolben-Verbrennungsmotors bekannt. Dieser Drucksensor hat als Sensorelement ein röhrchenförmiges piezoelektrisches Teil. An seinem einen Ende steht dieses röhrchenförmige Piezoteil mit einer Membran oder dgl. in kraftschlüssiger Verbindung, wobei diese Membran von ihrer anderen Seite mit dem Verbrennungsdruck beaufschlagt wird, der momentan im Verbrennungsraum des Motors herrscht. Das andere Ende des röhrchenförmigen Piezoteils liegt an einem Widerlager an, damit sich die auf das röhrchenförmige Teil übertragene Druckkraft in diesem Teil piezoelektrisch auswirken kann. Dieses röhrchenförmige Piezoteil liefert bei eingeprägter Druckkraft zwischen seinen auf einander gegenüberliegenden Oberflächen des Röhrchens befindlichen Elektroden eine elektrische Spannung, die der einwirkenden Druckkraft im wesentlichen proportional ist. Diese Spannung ist somit als Meßgröße für den Verbrennungsdruck im Verbrennungsraum des Motors verwertbar.

Eine andere Ausführungsform eines solchen Drucksensors ist aus der DE-OS 37 14 131 bekannt.

Im Regelfall ist vorgesehen, daß das Piezoteil als piezoelektrisches Sensorelement des Drucksensors in diesem derart eingebaut ist, daß es ständig unter einer Vorspannungskraft steht. Bei konstanter Vorspannungskraft wird kein piezoelektrisches Signal erzeugt, da nur einwirkende Kraftänderungen aufgrund des im wesentlichen nur dynamischen Verhaltens ein piezoelektrisches Spannungssignal liefern. Bei praktischen Versuchen wurde aber festgestellt, daß dennoch Störungen auftreten können. Es wurde ermittelt, daß dies darauf beruht, daß thermische Ausdehnungskoeffizienten bei Temperaturänderungen zur Einwirkung kommen, obwohl diese Vorgänge so langsam ablau fen daß sie keinen Einfluß haben sollten.

Es ist Aufgabe der vorliegenden Erfindung, eine technisch besonders vorteilhafte Art bzw. Ausführung anzugeben, die die aufgetretenen Störungen ausschließt.

Die Lösung der voranstehenden Aufgabe besteht in einer Ausführung eines derartigen Drucksensors, die sich aus den Merkmalen des Patentanspruches 1 ergibt. Weitere Ausgestaltungen und Weiterbildungen der Erfindung gehen aus den Unteransprüchen hervor.

Der Erfindung liegt die Erkenntnis zugrunde, daß dafür Sorge getragen sein muß, daß das Piezoteil auch bei Wärme-Längenänderungen und bei wärmebedingten Form- und Materialänderungen stets unter der Vorspannungskraft steht, ohne daß diese konstant gehalten sein muß.

Erläuterungen zur erfindungsgemäßen Lösung gehen aus der nachfolgenden Figurenbeschreibung hervor.

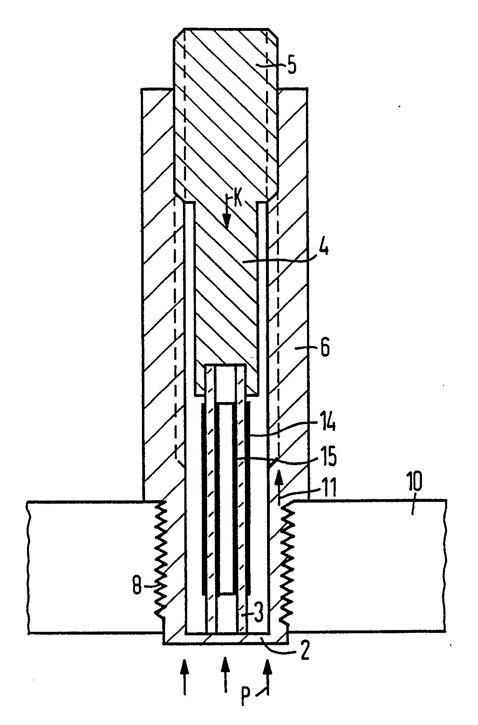

Der in einem Verbrennungsmotor mit Kolben auftretende Druck P wird über eine Membran 2 aus vorzugsweise Bronze oder Edelstahl auf ein insbesondere röhrchenförmiges Piezoteil 3 übertragen, wie dies aus der Figur hervorgeht. Das Piezoteil 3 list mit Elektroden 14 und 15 für die Abnahme der elektrischen Signalspannung, die dem dynamisch einwirkenden Druck P proportional ist, versehen. Das Piezoteil als Sensorelement besteht aus Piezokeramik, insbesondere aus Bleizirkonat-Titanat-Keramik.

An dem der Membran 2 gegenüberliegenden Ende des Piezoteils 3 liegt ein weiteres Teil 4 an, das im folgenden als Kompensationsteil bezeichnet wird. Mit 5 ist ein noch weiteres Teil bezeichnet, das hier in das Gehäuse 6 beispielsweise eingeschraubt ist. Durch Verdrehen dieses Teils 5 in dem Gewinde 7 läßt sich in einfacher Weise die obenerwähnte Vorspannungskraft K einstellen. Es können aber auch andere Maßnahmen wie Einpressen des Teils 5 vorgesehen sein. Die Teile 4 und 5 können auch ein einziges Teil 4/5 sein.

Die Membran 2 ist Teil des gesamten Gehäuses 6 des Drucksensors, der in den Motorblock einzusetzen ist. Zum Beispiel ist dieses Gehäuse 6 mittels des Gewindes 8 in den Motorblock bzw. Zylinderkopf 10 eingeschraubt, wie dies z.B. für Zündkerzen üblich ist.

Praktisch unvermeidlich erfolgt ein Wärmefluß, angedeutet mit dem Pfeil 11, in Richtung vom Gewinde 8 des Gehäuses 6 zu dessen gegenüberliegendem Ende. Dies bedeutet, daß das gesamte Gehäuse 6 bei Erwärmung eine Längenänderung erfährt.

Ohne das aus der Figur zu entnehmende Kompensationsteil 4 würde eine Veränderung der mechanischen Vorspannung eintreten, unter der das röhrchenförmige Piezoteil 3 zwischen der Membran 2 und dem Einschraubteil 5 stehen soll. Hinzu kommt, daß auch die Membran 2 bei unterschiedlich hohen Temperaturen verschieden hohe Steifigkeit aufweist, so daß sich auch aus diesem Grunde die auf das Piezoteil 3 einwirkende mechanische Vorspannung deutlich verringert, sobald die Membran auf Betriebstemperatur (bis 350°C) aufgeheizt wird. Insbesondere muß verhindert sein, daß das Piezoteil 3 bei irgendeinem Betriebszustand des Motors jegliche Vorspannung verliert und das elektrische Signal dieses Piezoteils 3 unter den Signal-Rauschpegel fällt.

Das erfindungsgemäß vorgesehene Kompensationsteil 4, das auch ein Anteil eines einstückigen Teils 4/5 sein kann, erfüllt aufgrund seiner gewählten Länge und des Temperaturkoeffizienten des dafür ausgewählten Materials über den im Betrieb auftretenden Temperaturbereich hinweg eine solche Längenänderung, daß bei jeglichen betriebsbedingten Längenänderungen des Gehäuses und des Piezoteils 3 und bei jeglichen betriebsbedingten Änderungen von Form und Materialeigenschaft der Membran 2 dieses Piezoteil 3 stets unter einer vorzugsweise konstanten mechanischen Vorspannung steht. Bei der erfindungsgemäßen Ausführungsform ist von Vorteil, daß diese Vorspannungskraft nicht notwendigerweise konstant gehalten sein muß, d.h. insoweit keine extremen Anforderungen an die Wirkungsweise des Kompensationsteils 4 zu stellen sind.

Das Kompensationsteil 4 bzw. ein der Kompensation dienender Anteil 4 eines einstückigen Teiles 4/5 ist im Inneren des Gehäuses 6 zumindest frei gleitend gehalten. Durch Anliegen des Kompensationsteils 4 an der Innenwand des Gehäuses 6 kann gezielt Wärmeübergang auf dieses Kompensationsteil 4 vorgesehen sein. Es kann aber auch ein seitlicher Abstand zwischen dem Kompensationsteil 4 und der Innenwand des Gehäuses 6 vorgesehen sein.

Für das Kompensationsteil kann z.B. Messing vorgesehen sein. Dieses Material hat mit Alpha = $18,0 \cdot 10^{-6}$ etwa 2,5 mal so große Wärmeausdehung wie das Material Vacon 70, das für das Gehäuse 6 und wie Vibrit, das als piezoelektrisches Material für das Piezoteil 3 verwendet sein kann. Ab einer bestimmten Länge des Kompensationsteils ist die sich im Betrieb ergebende thermische Ausdehnung dieses Kompensationsteils 4 zusammen mit der thermischen Ausdehnung des Piezoteils 3 mindestens ebenso groß, wie die des Gehäuses 6. Bei entsprechender Bemessung der Länge des Kompensationsteils 4 (bei vorgegebener Länge des Piezoteils 3) erreicht man somit nicht nur die Kompensation der thermischen Längenänderungen, sondern es kann damit auch eine Abnahme der von der Membran 2 erzeugten mechanischen Vorspannung kompensiert werden.

Ein Ausführungsbeispiel für einen Sensor mit Kompensationselement läßt sich mit Hilfe einer Finite-Elemente-Rechnung für verschiedene Temperaturverteilungen und Belastungsfälle ermitteln. Ein solches Ergebnis liefert für ein Piezoröhrchen mit der Länge 13 mm bei einem Membrandurchmesser von 4,6 mm und einer wirksamen Gehäuselänge von 18 mm für den Kompensationskörper eine Länge von 5mm.

Weitere für das Kompensationsteil 4 geeignete Materialien sind z.B. Aluminium mit einem Wert Alpha = $23 \cdot 10^{-6}$, Kupfer (mit $16,8 \cdot 10^{-6}$), Neusilber (mit $18,0 \cdot 10^{-6}$) und dgl..

**Ansprüche**

1. Drucksensor für den Verbrennungsraum von Kolben-Verbrennungsmotoren, mit einem in einem Gehäuse befindlichen Piezoteil als Sensorelement und mit einer Membran, die eine den Verbrennungsdruck auf das Piezoteil übertragendes Wandteil des Gehäuses ist, **gekennzeichnet dadurch,** daß im Inneren des Gehäuses (6) ein bezüglich der Druckkraft (P) mit dem Piezoteil (3) in Reihe angeordnetes Kompensationsteil (4) vorgesehen ist, das hinsichtlich seiner Längenabmessung und seines Materials vergleichsweise zum Material des Gehäuses (6) und der Membran (2) so ausgewählt ist, daß thermisch bedingt, im Betrieb auftretende Längenänderungen des Piezoteils (3) und Gehäuses (6) und Änderungen der Materialeigenschaft der Membran (2) derart kompensiert sind, daß das Piezoteil (3) bei allen im Betrieb auftretenden Erwärmungszuständen des Drucksensors unter einer vorgebbaren Mindest-Druck-Vorspannung steht.

2. Drucksensor nach Anspruch 1, **gekennzeichnet dadurch,** daß diese vorgegebene Mindest-Druck-Vorspannung im Betrieb auf einen engen Schwankungsbereich im wesentlichen konstant ist.

3. Drucksensor nach Anspruch 1 oder 2, **gekennzeichnet dadurch,** daß das Piezoteil aus Piezokeramik besteht.

4. Drucksensor nach Anspruch 1, 2 oder 3, **gekennzeichnet dadurch,** daß das Kompensationsteil aus Messing besteht.

5. Drucksensor nach Anspruch 1, 2 oder 3, **gekennzeichnet dadurch,** daß das Kompensationsteil aus Aluminium besteht.

6. Drucksensor nach Anspruch 1, 2 oder 3, **gekennzeichnet dadurch,** daß das Kompensationsteil aus Kupfer besteht.

7. Drucksensor nach Anspruch 1, 2 oder 3, **gekennzeichnet dadurch,** daß das Kompensationsteil aus Neusilber besteht.

8. Drucksensor nach einem der Ansprüche 1 bis 7, **gekennzeichnet dadurch,** daß das Gehäuse aus Vakon besteht.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| X | AT - B - 258 610<br>(LIST)<br>    * Fig. 2; Seite 3, Zeilen 30 -53 * | 1,2, 4-7 | G 01 L 9/08 |
| Y | -- | 3 | |
| D,Y | DE - A1 - 3 714 131<br>(SIEMENS)<br>    * Zusammenfassung *<br>    -- | 3 | |
| A | GB - A - 1 243 546<br>(KISTLER)<br>    * Seite 4, Zeilen 51-87;<br>    Fig. 1 *<br>    ---- | 1 | |

**RECHERCHIERTE SACHGEBIETE (Int. Cl⁵)**

G 01 L 9/00

Der vorliegende Recherchenbericht wurde für alle Patentansprüche erstellt.

| Recherchenort | Abschlußdatum der Recherche | Prüfer |
|---|---|---|
| WIEN | 21-06-1990 | BURGHARDT |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82